# EUROPEAN PATENT APPLICATION

(11) **EP 4 817 776 A1**
(43) Date of publication of application: **07.10.2026**
(21) Application number: 26164863.8
(22) Date of filing: 16.03.2026
(51) Int. Cl.: B23K 9/04, B23K 9/095, B23K 9/173, B33Y 10/00

(54) **ADDITIVE MANUFACTURING SYSTEM**

(30) Priority: 31.03.2025 JP 2025057493
(71) Applicant: DAIHEN Corporation, Yodogawa-ku Osaka-shi Osaka 532-8512 (JP)
(72) Inventor: TSUTSUI, Kenta, Osaka, 532-8512 (JP); KADOTA, Keiji, Osaka, 532-8512 (JP)
(74) Representative: Zacco GmbH

(57) **Abstract**

An additive manufacturing system (1) includes a welding torch (20), a drive device, a welding power supply (10), and a controller (30) that controls the welding torch (20), the drive device, and the welding power supply (10) so as to form any one portion of an outer peripheral portion (71) and an inner portion (72), which is surrounded by the outer peripheral portion (71), and then form the other portion in formation of each layer in an additively-manufactured product. The controller (30) individually sets an EN ratio of the outer peripheral portion (71) that is an EN ratio of an alternating current in the formation of the outer peripheral portion (71) and an EN ratio of the inner portion (72) that is an EN ratio of the alternating current in the formation of the inner portion (72).

## Description

### CROSS REFERENCE TO RELATED APPLICATIONS

This nonprovisional application is based on Japanese Patent Application No. 2025-057493 filed on March 31, 2025 with the Japan Patent Office, the entire contents of which are hereby incorporated by reference.

### BACKGROUND OF THE INVENTION

### Field of the Invention

The present disclosure relates to an additive manufacturing system.

### Description of the Background Art

Japanese Patent No. 6783964 discloses a method of manufacturing an additively-manufactured product by stacking a weld bead to form an additively-manufactured product. Japanese Patent No. 6783964 discloses a technique of contriving the order of stacking the weld bead to accurately form the weld bead while reducing the occurrence of an unwelded portion.

### SUMMARY OF THE INVENTION

However, the technique described in Japanese Patent No. 6783964 does not take into consideration the amount of heat input to the weld bead. Consequently, as the stacking height of the weld bead increases, a portion of the weld bead, which is prone to heat accumulation, may burn through, potentially leading to an unstable shape of the additively-manufactured product.

An object of the present disclosure is to provide a technique capable of forming a stable additively-manufactured product with reduced burn-through of a weld bead.

The present disclosure relates to an additive manufacturing system that supplies a welding current to a consumable electrode wire and stacks a weld bead to form an additively-manufactured product. The additive manufacturing system includes: a welding torch that stacks the weld bead using the consumable electrode wire; a drive device that moves the welding torch; a welding power supply that supplies an alternating current (AC) to the consumable electrode wire as the welding current; and a controller that controls the welding torch, the drive device, and the welding power supply so as to form any one portion of an outer peripheral portion and an inner portion, which is surrounded by the outer peripheral portion, and then form the other portion in formation of each layer in the additively-manufactured product. The controller individually sets an EN ratio of the outer peripheral portion that is an EN ratio of the alternating current in the formation of the outer peripheral portion, and an EN ratio of the inner portion that is an EN ratio of the alternating current in the formation of the inner portion.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic diagram showing an additive manufacturing system according to Embodiment 1.
Fig. 2 is a diagram for illustrating an EN ratio.
Fig. 3 is a diagram for illustrating an example relationship between a welding current and a wire melting rate for each EN ratio.
Fig. 4 is a diagram for illustrating an example shape of an additively-manufactured product according to Embodiment 1.
Fig. 5 is a flowchart showing control contents according to Embodiment 1.
Fig. 6 is a flowchart showing control contents according to Embodiment 2.
Fig. 7 is a flowchart showing control contents according to Embodiment 3.
Fig. 8 is a flowchart showing control contents according to Embodiment 4.

### DESCRIPTION OF THE PREFERRED EMBODIMENTS

Embodiments of the present disclosure will be described below in detail with reference to the accompanying drawings. The same or common portions are denoted by the same reference signs in the drawings, and the description thereof will not be repeated.

### [Embodiment 1]

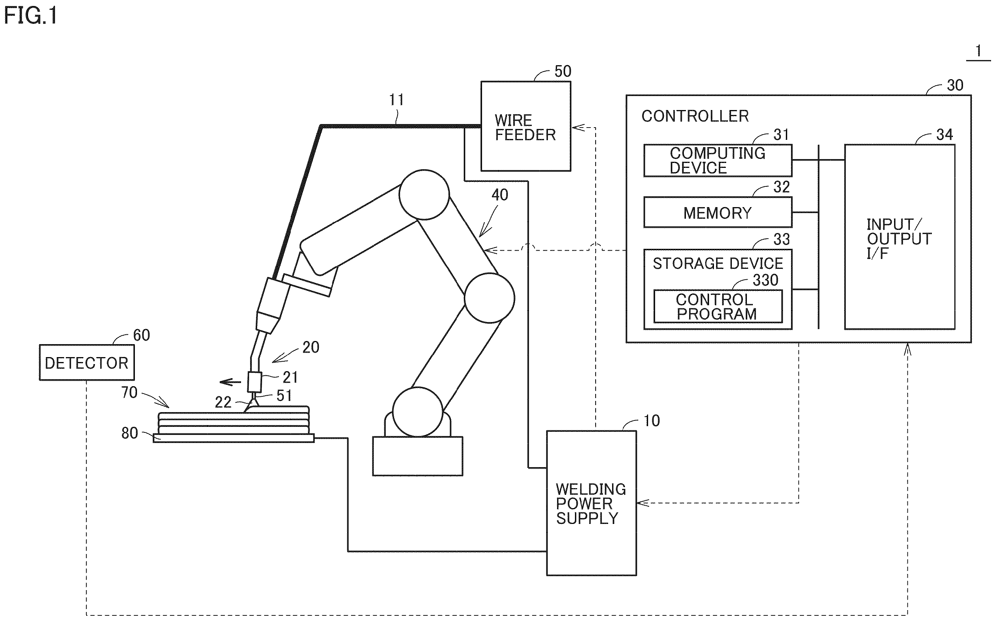

Fig. 1 is a schematic diagram showing an additive manufacturing system 1 according to Embodiment 1. Additive manufacturing system 1 includes a robot arm 40, a welding torch 20, a welding power supply 10, a wire feeder 50, a detector 60, and a controller 30.

Robot arm 40 is a multi-articulated arm, for example, a 6-axis articulated arm. Robot arm 40 functions as a drive device that moves welding torch 20 at a preset or calculated welding rate. As robot arm 40 moves welding torch 20, a weld bead 70, which is obtained by melting consumable electrode wire 51, is stacked. Robot arm 40 is controlled by controller 30 such that an additively-manufactured product is additively manufactured by stacking weld bead 70.

Welding torch 20 supplies a welding current to consumable electrode wire 51 via a power supply tip (not shown) located inside nozzle 21. Consumable electrode wire 51 melts due to the arc generated between a base material 80 or stacked weld bead 70 and consumable electrode wire 51, and resistive heating by the passage of current. Melting of consumable electrode wire 51 forms weld bead 70. Welding torch 20 stacks weld bead 70 using consumable electrode wire 51. Welding torch 20 is supplied with shielding gas by a shielding gas supply unit (not shown), and the shielding gas flows out of nozzle 21 to an arc 22 and a melted portion. The shielding gas may be, for example, argon, CO₂, or a gas mixture of these gases.

A cable for the current supplied from welding power supply 10, consumable electrode wire 51 fed from wire feeder 50, and a pipe for the shielding gas supplied from the shielding gas supply unit (not shown) run through a torch cable 11 connected to welding torch 20.

Welding power supply 10 supplies an alternating current to consumable electrode wire 51 as the welding current. The magnitude of the welding current output from welding power supply 10 and the EN ratio are set by controller 30. Herein, the EN ratio is a ratio of a period of time during a wire negative-polarity period to a total period of time in one AC cycle. Alternatively, the EN ratio may be a ratio of a value, obtained by time integration of a negative-polarity current in one AC cycle, to a value, obtained by time integration of a current in one AC cycle (the sum of a value, obtained by time integration of a positive-polarity current, and a value, obtained by time integration of a negative-polarity current).

Wire feeder 50 includes a roller (not shown) and a motor (not shown). Wire feeder 50 feeds consumable electrode wire 51 to welding torch 20 by driving the motor to rotate the roller. The operation of wire feeder 50 is controlled by welding power supply 10 based on a command from controller 30. The operation of wire feeder 50 may also be directly controlled by welding power supply 10.

Detector 60 functions as a sensor capable of detecting the height of weld bead 70 in the stacking direction. Detector 60 is, for example, a non-contact sensor such as a laser scanner. Detector 60 transmits height information at each position of weld bead 70 to controller 30 as shape information of weld bead 70. Detector 60 may be a camera or the like capable of acquiring an image of weld bead 70. Controller 30 may analyze an image of weld bead 70 received from detector 60 and detect the stacking height of weld bead 70 at each position.

Controller 30 includes a computing device 31, a memory 32, a storage device 33, and an input/output interface 34. These components are connected via a bus.

Computing device 31 is a computing entity (computer) that executes predetermined processing. Computing device 31 is configured of, for example, a processor such as a central processing unit (CPU), a micro-processing unit (MPU), a tensor processing unit (TPU), or a graphics processing unit (GPU). Computing device 31 may also be interpreted as processing circuitry that executes predetermined processing.

Memory 32 includes a storage area (e.g., working area) in which a program code, work memory, or the like is stored for computing device 31 to execute various programs.

Storage device 33 functions as a storage unit for storing various programs or various pieces of data executed by computing device 31. For example, storage device 33 stores a control program 330 executed by computing device 31.

Input/output interface 34 receives input of various pieces of data. Input/output interface 34 outputs data obtained through various types of processing according to instructions from computing device 31. For example, information detected by detector 60 is input to input/output interface 34.

Additive manufacturing system 1 supplies a welding current to consumable electrode wire 51 and stacks a plurality of layers of weld bead 70, thereby forming an additively-manufactured product. In additive manufacturing system 1, an additively-manufactured product is formed by controller 30 controlling welding torch 20, robot arm 40, and welding power supply 10 in the formation of each layer of the additively-manufactured product.

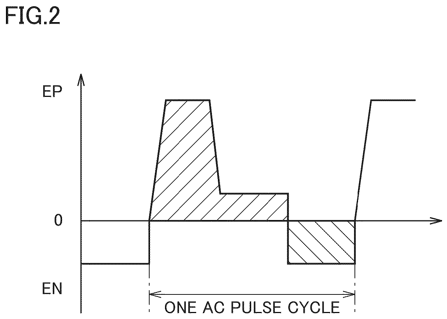

Fig. 2 is a diagram for illustrating the EN ratio. Welding power supply 10 switches the polarity between the electrode positive polarity and the electrode negative polarity supplied to consumable electrode wire 51 in welding torch 20. The electrode positive polarity refers to the polarity state where the consumable electrode wire 51 side is an anode and the base material 80 or weld bead 70 side is a cathode in the path of the current supplied from welding power supply 10. The electrode negative polarity refers to the polarity state where the base material 80 or weld bead 70 side is an anode and the consumable electrode wire 51 side is a cathode in the path of the current supplied from welding power supply 10.

For example, for the pulse waveform shown in Fig. 2, the ratio of the electrode positive polarity to the sum of the electrode positive polarity and the electrode negative polarity is referred to as an EP ratio, and the ratio of the electrode negative polarity to the sum is referred to as an EN ratio. As shown in Fig. 2, welding power supply 10 can output a welding current where, for example, the electrode positive polarity and the electrode negative polarity can alternately be replaced by each other in one AC pulse cycle. The EN ratio can be set similarly for the waveform of short-circuit welding involving a short-circuit transition, not for the pulse waveform.

It is known that the wire melting rate of consumable electrode wire 51 increases during the period of the electrode negative polarity. This is because the amount of heat input from arc 22 to consumable electrode wire 51 is greater during the period of the electrode negative polarity than during the period of the electrode positive polarity, and conversely, the amount of heat input from arc 22 to base material 80 or weld bead 70 is greater during the period of the electrode positive polarity than during the period of the electrode negative polarity. Thus, the wire melting rate can be adjusted by the EN ratio.

Heat input from arc 22 to the melted portion can also be increased by increasing the amplitude of the welding current in Fig. 2. However, in arc 22, an excessive increase in heat input to the melted portion by increasing the welding current destabilizes the state of weld bead 70, resulting in burn-through. Thus, controller 30 controls the magnitude of the welding current output by welding power supply 10 and the EN ratio, thereby bringing weld bead 70 into a state suitable for stacking.

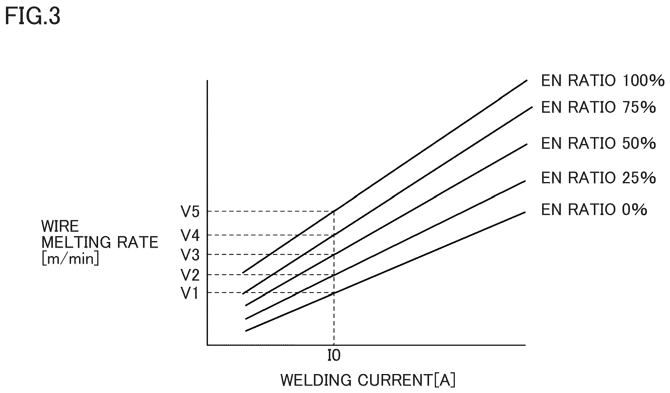

Fig. 3 is a diagram for illustrating an example relationship between welding current and wire melting rate for each EN ratio. In Fig. 3, the horizontal axis represents welding current, and the vertical axis represents wire melting rate. As shown in Fig. 3, there is a characteristic in which the wire melting rate increases as the welding current increases.

In order to stably stack weld bead 70, it is important to keep the amount of heat input to the melted portion constant by maintaining a constant welding current. For example, if the stacking height of weld bead 70 is to be increased, it is conceivable to increase the wire melting rate while maintaining a constant amount of heat input to the melted portion. However, for a consumable electrode, there is a positive correlation between welding current and wire melting rate, as shown in Fig. 3. Thus, considering only a simple direct current (EN ratio 0%), increasing the wire melting rate may also increase the welding current, which prevents the amount of heat input to the melted portion from being kept constant, potentially causing weld bead 70 to burn through. Thus, it is considered to adjust the EN ratio using the alternating current to change the wire melting rate while maintaining a constant amount of heat input to the melted portion.

As shown in Fig. 3, the relationship between welding current and wire melting rate is such that, when the welding current is kept constant at I0, the wire melting rate of consumable electrode wire 51 increases from V1 to V5 as the EN ratio increases. In other words, it is found that stably stacking weld bead 70 only needs to change the EN ratio to change the wire melting rate, while maintaining a constant heat input by keeping the welding current at I0.

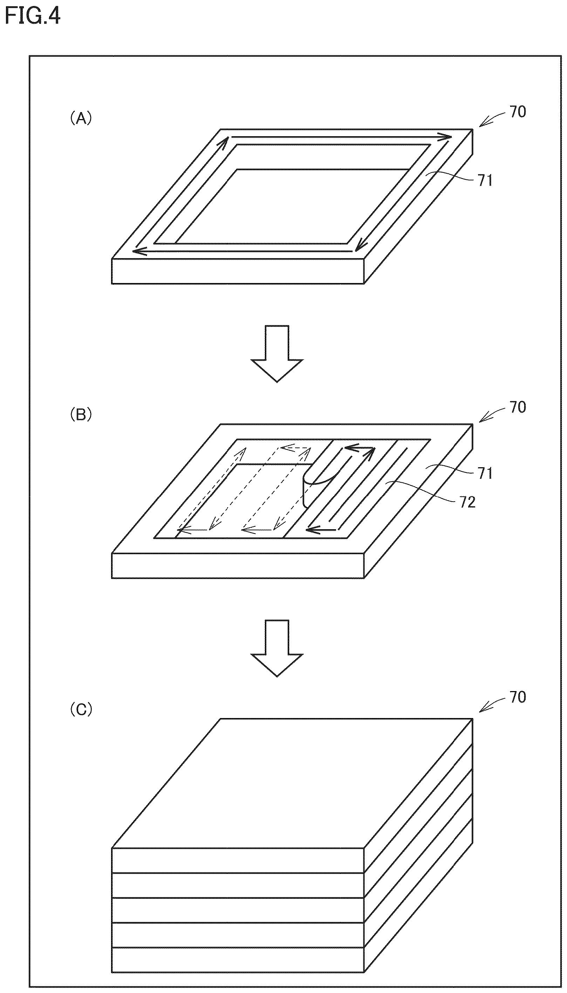

Next, an additively-manufactured product formed by stacking weld bead 70 will be described. Fig. 4 is a diagram for illustrating an example shape of the additively-manufactured product according to Embodiment 1. The additively-manufactured product is formed, for example, in order shown in part (A), part (B), and part (C) of Fig. 4. Controller 30 forms an additively-manufactured product by controlling welding torch 20, robot arm 40, and welding power supply 10. Controller 30 forms the final product by, for example, stacking layers one by one. The arrows shown in parts (A) and (B) of Fig. 4 indicate the direction in which weld bead 70 is welded in the formation of each layer in the additively-manufactured product.

As shown in part (A) of Fig. 4, controller 30 first forms an outer peripheral portion 71 using weld bead 70 in the formation of each layer in the additively-manufactured product. For example, when the final structure of the additively-manufactured product is a rectangular parallelepiped, controller 30 forms outer peripheral portion 71 around the additively-manufactured product such that corners are formed at four corners of the additively-manufactured product.

Subsequently, as shown in part (B) of Fig. 4, after forming outer peripheral portion 71, controller 30 forms an inner portion 72 surrounded by outer peripheral portion 71 using weld bead 70. For example, in the formation of inner portion 72, controller 30 flows weld bead 70 along one inner side of outer peripheral portion 71 and folds back weld bead 70 at the inner edge of outer peripheral portion 71. Controller 30 then forms inner portion 72 by repeating the step of flowing weld bead 70 along the previously stacked weld bead 70 and folding back weld bead 70 at the inner edge of outer peripheral portion 71 until the side opposite the inner side of outer peripheral portion 71 is reached.

Controller 30 repeats the steps of parts (A) and (B) of Fig. 4 over a plurality of layers, finally forming an additively-manufactured product of rectangular parallelepiped shape using weld bead 70, as shown in part (C) of Fig. 4. Herein, in the additively-manufactured product, inner portion 72, which has a larger number of overlapping portions of weld bead 70, tends to have a stacking height higher than that of outer peripheral portion 71. In particular, stacking weld bead 70 over a plurality of layers as shown in part (C) of Fig. 4 may result in a large difference in stacking height between outer peripheral portion 71 and inner portion 72.

If a difference is caused in stacking height, for an equal stack height, it is conceivable to increase the amount of heat input to the portion lower in stacking height to increase a welding volume. However, simply increasing the current to increase the amount of heat input may cause weld bead 70 to burn through. In the present embodiment, thus, the welding volume is adjusted to be increased or decreased in correspondence with the wire melting rate by varying the EN ratio while maintaining a constant welding current, as shown in Fig. 3. In particular, the stacking height differs between outer peripheral portion 71 and inner portion 72 depending on the manner of overlapping of weld bead 70. In the present embodiment, thus, the EN ratio of outer peripheral portion 71 and the EN ratio of inner portion 72 are set separately. A specific control method will be described below.

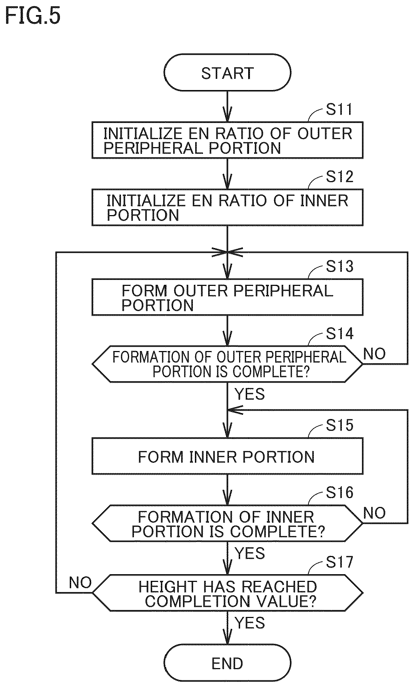

Fig. 5 is a flowchart showing control contents according to Embodiment 1. The processing in the flowchart of Fig. 5 is repeatedly called, from the main routine in control of controller 30, as a subroutine and performed. Controller 30 first initializes the EN ratio of outer peripheral portion 71 in step S (hereinafter simply referred to as "S") 11. Controller 30 then initializes the EN ratio of inner portion 72 (S12).

As shown in S11 and S12, controller 30 sets the EN ratio of outer peripheral portion 71 and the EN ratio of inner portion 72 before starting the stacking of weld bead 70. For the EN ratio of outer peripheral portion 71 and the EN ratio of inner portion 72, it suffices that appropriate information corresponding to the shape of the final additively-manufactured product or the like is stored in storage device 33. For example, the EN ratio of outer peripheral portion 71 may be set such that the EN ratio of outer peripheral portion 71 in each layer is set in correspondence with the final stacking height of weld bead 70 at outer peripheral portion 71. The EN ratio of inner portion 72 may be set such that the EN ratio of inner portion 72 in each layer is set in correspondence with the final stacking height of weld bead 70 at inner portion 72.

Subsequently, controller 30 forms outer peripheral portion 71 using weld bead 70 (S13). Controller 30 then determines whether the formation of outer peripheral portion 71 is complete (S14). When determining in S14 that the formation of outer peripheral portion 71 is not complete (NO in S14), controller 30 repeats processing of S13. When determining in S14 that the formation of outer peripheral portion 71 is complete (YES in S14), controller 30 proceeds to processing of S15.

Subsequently, controller 30 forms inner portion 72 using weld bead 70 (S15). Next, controller 30 determines whether the formation of inner portion 72 is complete (S16). When determining in S16 that the formation of inner portion 72 is not complete (NO in S16), controller 30 repeats processing of S15. When determining in S 16 that the formation of inner portion 72 is complete (YES in S16), controller 30 proceeds to processing of S17.

Subsequently, controller 30 determines whether the stacking height has reached a completion value (S17). The completion value is a value corresponding to the height of the final layer at which the formation of the additively-manufactured product is complete. When determining in S17 that the stacking height has not reached the completion value (NO in S17), controller 30 repeats processing of S13 and subsequent processing. When determining in S17 that the stacking height has reached the completion value (YES in S17), controller 30 terminates processing.

In Embodiment 1, controller 30 sets the EN ratio of outer peripheral portion 71 and the EN ratio of inner portion 72 before starting the stacking of weld bead 70, as shown in S11 and S12. This enables the formation of a stable additively-manufactured product with reduced burn-through of weld bead 70, based on the EN ratio of outer peripheral portion 71 and the EN ratio of inner portion 72, which are determined with consideration given to the shape of the final product.

### [Embodiment 2]

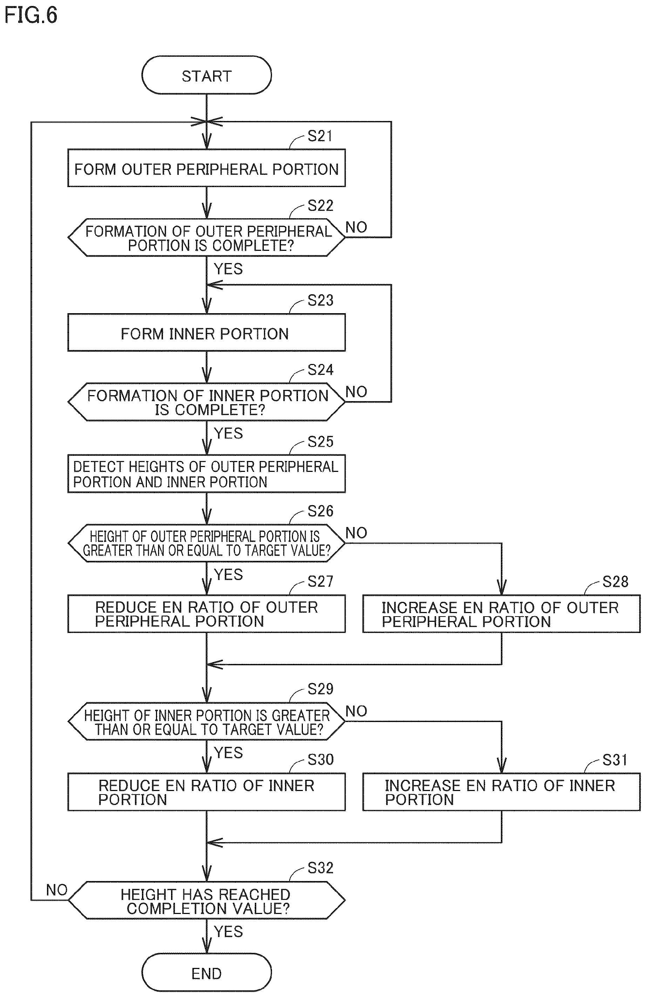

An additive manufacturing system of Embodiment 2 will be described. The additive manufacturing system of Embodiment 2 has a configuration similar to that of additive manufacturing system 1 of Embodiment 1 shown in Fig. 1 and differs in control contents. Fig. 6 is a flowchart showing control contents according to Embodiment 2.

First, controller 30 forms outer peripheral portion 71 using weld bead 70 (S21). Controller 30 then determines whether the formation of outer peripheral portion 71 is complete (S22). When determining in S22 that the formation of outer peripheral portion 71 is not complete (NO in S22), controller 30 repeats processing of S21. When determining in S22 that the formation of outer peripheral portion 71 is complete (YES in S22), controller 30 proceeds to processing of S23.

Subsequently, controller 30 forms inner portion 72 using weld bead 70 (S23). Controller 30 then determines whether the formation of inner portion 72 is complete (S24). When determining in S24 that the formation of inner portion 72 is not complete (NO in S24), controller 30 repeats processing of S23. When determining in S24 that the formation of inner portion 72 is complete (YES in S24), controller 30 proceeds to processing of S25. The EN ratio of outer peripheral portion 71 in S21 and the EN ratio of inner portion 72 in S23 are preset values.

Subsequently, controller 30 detects the heights of outer peripheral portion 71 and inner portion 72 with detector 60 that detects the height of weld bead 70 (S25). Controller 30 then determines whether the height of outer peripheral portion 71 is greater than or equal to a predetermined target value (S26). When determining in S26 that the height of outer peripheral portion 71 is greater than or equal to the target value (YES in S26), controller 30 reduces the EN ratio of outer peripheral portion 71 in order to reduce the height of weld bead 70 (S27), and proceeds to processing of S29. When determining in S26 that the height of outer peripheral portion 71 is less the target value (NO in S26), controller 30 increases the EN ratio of outer peripheral portion 71 in order to increase the height of weld bead 70 (S28), and proceeds to processing of S29.

Subsequently, controller 30 determines whether the height of inner portion 72 is greater than or equal to a predetermined target value (S29). When determining in S29 that the height of inner portion 72 is greater than or equal to the target value (YES in S29), controller 30 reduces the EN ratio of inner portion 72 to reduce the height of weld bead 70 (S30), and proceeds to processing of S32. When determining in S29 that the height of inner portion 72 is less than the target value (NO in S29), controller 30 increases the EN ratio of inner portion 72 to increase the height of weld bead 70, (S31) and proceeds to processing of S32.

Herein, the target value shown in S26 and S29 is a value determined such that the height of the additively-manufactured product achieves a stable shape. Subsequently, controller 30 determines whether the stacking height has reached a completion value (S32). When determining in S32 that the stacking height has not reached the completion value (NO in S32), controller 30 repeats processing of S21 and subsequent processing. When determining in S32 that the stacking height has reached the completion value (YES in S32), controller 30 terminates processing.

In Embodiment 2, as shown in S25 to S31, controller 30 sets the EN ratio of outer peripheral portion 71 in accordance with the height of weld bead 70 at outer peripheral portion 71, and sets the EN ratio of inner portion 72 in accordance with the height of weld bead 70 at inner portion 72. Consequently, the EN ratio can be set based on the height of weld bead 70 during stacking, thereby forming a stable additively-manufactured product with reduced burn-through of weld bead 70.

### [Embodiment 3]

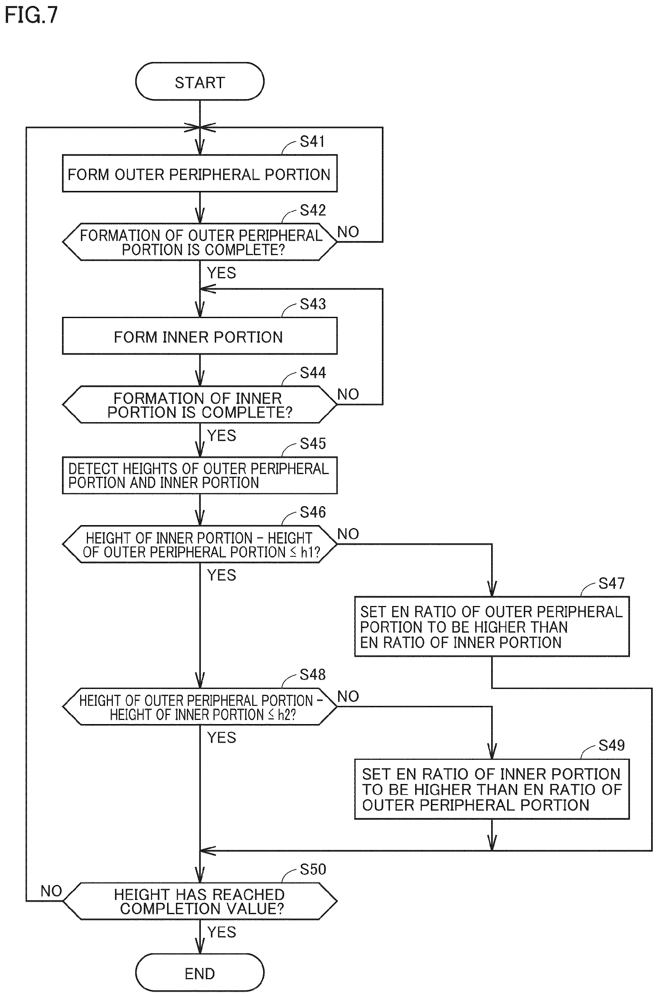

An additive manufacturing system of Embodiment 3 will be described. The additive manufacturing system of Embodiment 3 has a configuration similar to that of additive manufacturing system 1 of Embodiment 1 shown in Fig. 1 and differs in control contents. Fig. 7 is a flowchart showing control contents according to

### Embodiment 3.

First, controller 30 forms outer peripheral portion 71 using weld bead 70 (S41). Controller 30 then determines whether the formation of outer peripheral portion 71 is complete (S42). When determining in S42 that the formation of outer peripheral portion 71 is not complete (NO in S42), controller 30 repeats processing of S41. When determining in S42 that the formation of outer peripheral portion 71 is complete (YES in S42), controller 30 proceeds to processing of S43.

Subsequently, controller 30 forms inner portion 72 using weld bead 70 (S43). Controller 30 then determines whether the formation of inner portion 72 is complete (S44). When determining in S44 that the formation of inner portion 72 is not complete (NO in S44), controller 30 repeats processing of S43. When determining in S44 that the formation of inner portion 72 is complete (YES in S44), controller 30 proceeds to processing of S45. The EN ratio of outer peripheral portion 71 in S41 and the EN ratio of inner portion 72 in S43 are preset values.

Subsequently, controller 30 detects the heights of outer peripheral portion 71 and inner portion 72 with detector 60 that detects the height of weld bead 70 (S45). Controller 30 then determines whether the value obtained by subtracting the stacking height of outer peripheral portion 71 from the stacking height of inner portion 72 is less than or equal to a predetermined threshold h1, based on the detection value of detector 60 (S46). When determining in S46 that the value obtained by subtracting the stacking height of outer peripheral portion 71 from the stacking height of inner portion 72 is less than or equal to predetermined threshold h1 (YES in S46), controller 30 proceeds to processing of S48.

When determining in S46 that the value obtained by subtracting the stacking height of outer peripheral portion 71 from the stacking height of inner portion 72 has exceeded predetermined threshold h1 (NO in S46), controller 30 sets the EN ratio of outer peripheral portion 71 and the EN ratio of inner portion 72 such that the EN ratio of outer peripheral portion 71 is higher than the EN ratio of inner portion 72 (S47), and proceeds to processing of S50. Herein, in S46, the value, obtained by subtracting the stacking height of outer peripheral portion 71 from the stacking height of inner portion 72, having exceeded predetermined threshold h1 means that the stacking height of inner portion 72 has become higher than the stacking height of outer peripheral portion 71 to the extent exceeding threshold h1. Thus, in S47, the stacking height of outer peripheral portion 71 can be set to be higher by setting the EN ratio of outer peripheral portion 71 to be higher than the EN ratio of inner portion 72.

Controller 30 determines whether the value obtained by subtracting the stacking height of inner portion 72 from the stacking height of outer peripheral portion 71 is less than or equal to a predetermined threshold h2, based on the detection value of detector 60 (S48). When determining in S48 that the value obtained by subtracting the stacking height of inner portion 72 from the stacking height of outer peripheral portion 71 is less than or equal to predetermined threshold h2 (YES in S48), controller 30 proceeds to processing of S50.

When determining in S48 that the value obtained by subtracting the stacking height of inner portion 72 from the stacking height of outer peripheral portion 71 has exceeded predetermined threshold h2 (NO in S48), controller 30 sets the EN ratio of outer peripheral portion 71 and the EN ratio of inner portion 72 such that the EN ratio of inner portion 72 is higher than the EN ratio of outer peripheral portion 71 (S49), and proceeds to processing of S50. Herein, in S48, the value, obtained by subtracting the stacking height of inner portion 72 from the stacking height of outer peripheral portion 71, having exceeded predetermined threshold h2 means that the stacking height of outer peripheral portion 71 has become higher than the stacking height of inner portion 72 to the extent exceeding predetermined threshold h2. Thus, in S49, setting the EN ratio of inner portion 72 to be higher than the EN ratio of outer peripheral portion 71 can set the stacking height of inner portion 72 to be higher.

Subsequently, controller 30 determines whether the stacking height has reached a completion value (S50). When determining in S50 that the stacking height has not reached the completion value (NO in S50), controller 30 repeats processing of S41 and subsequent processing. When determining in S50 that the stacking height has reached the completion value (YES in S50), controller 30 terminates processing.

In Embodiment 3, as shown in S45 to S49, controller 30 sets the EN ratio of outer peripheral portion 71 and the EN ratio of inner portion 72 by comparing the value obtained by subtracting the stacking height of outer peripheral portion 71 from the stacking height of inner portion 72 and the value obtained by subtracting the stacking height of inner portion 72 from the stacking height of outer peripheral portion 71 with the respective set thresholds, based on the detection value of detector 60. Consequently, the EN ratio can be set based on the threshold during stacking, thereby forming a stable additively-manufactured product with reduced burn-through of weld bead 70.

### [Embodiment 4]

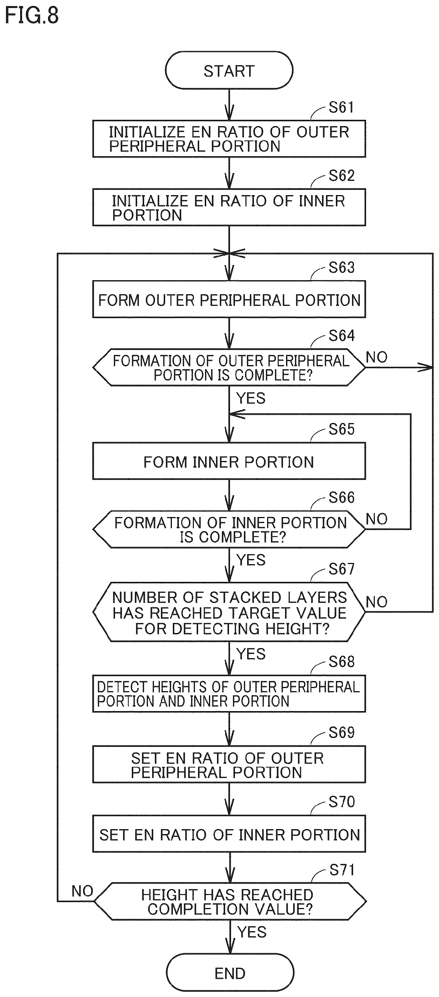

An additive manufacturing system of Embodiment 4 will be described. The additive manufacturing system of Embodiment 4 has a configuration similar to that of additive manufacturing system 1 of Embodiment 1 shown in Fig. 1 and differs in control contents. Fig. 8 is a flowchart showing control contents according to Embodiment 4.

First, controller 30 initializes the EN ratio of outer peripheral portion 71 (S61). Controller 30 then initializes the EN ratio of inner portion 72 (S62). Controller 30 then forms outer peripheral portion 71 using weld bead 70 (S63). Controller 30 then determines whether the formation of outer peripheral portion 71 is complete (S64). When determining in S64 that the formation of outer peripheral portion 71 is not complete (NO in S64), controller 30 repeats processing of S63. When determining in S64 that the formation of outer peripheral portion 71 is complete (YES in S64), controller 30 proceeds to processing of S65.

Subsequently, controller 30 forms inner portion 72 using weld bead 70 (S65). Controller 30 then determines whether the formation of inner portion 72 is complete (S66). When determining in S66 that the formation of inner portion 72 is not complete (NO in S66), controller 30 repeats processing of S65. When determining in S66 that the formation of inner portion 72 is complete (YES in S66), controller 30 proceeds to processing of S67.

Subsequently, controller 30 determines whether the number of stacked layers of weld bead 70 at outer peripheral portion 71 and inner portion 72 has reached a target value for detecting the stacking height of weld bead 70 (S67). When determining in S67 that the number of stacked layers of weld bead 70 at outer peripheral portion 71 and inner portion 72 has not reached the target value for detecting the stacking height of weld bead 70 (NO in S67), controller 30 repeats processing of S63 and subsequent processing.

When determining in S67 that the number of stacked layers of weld bead 70 at outer peripheral portion 71 and inner portion 72 has reached the target value for detecting the stacking height of weld bead 70 (YES in S67), controller 30 detects the heights of outer peripheral portion 71 and inner portion 72 (S68). Herein, the number of stacked layers of weld bead 70 at outer peripheral portion 71 and inner portion 72 having reached the target value for detecting the stacking height of weld bead 70 means that the additive manufacturing has progressed to reach the predetermined target number of stacked layers. Through processing of S67, controller 30 detects the heights of outer peripheral portion 71 and inner portion 72 multiple times at the stage before the completion of the final additive manufacturing.

Subsequently, controller 30 sets the EN ratio of outer peripheral portion 71 (S69). Controller 30 then sets the EN ratio of inner portion 72 (S70). In S69 and S70, controller 30 sets the EN ratio of outer peripheral portion 71 and the EN ratio of inner portion 72 based on the detection value of detector 60 detected in step S68. Controller 30 then determines whether the stacking height has reached a completion value (S71). When determining in S71 that the stacking height has not reached the completion value (NO in S71), controller 30 repeats processing of S63 and subsequent processing. When determining in S71 that the stacking height has reached the completion value (YES in S71), controller 30 terminates processing.

In Embodiment 4, as shown in S67 to S70, when the number of stacked layers reaches the target value for detecting the height, controller 30 sets the EN ratio of outer peripheral portion 71 and the EN ratio of inner portion 72 based on the detection value of detector 60. Consequently, the EN ratio can be set each time the number of stacked layers reaches the target value for detecting the height during stacking, thus forming a stable additively-manufactured product with reduced burn-through of weld bead 70.

### [Other Modifications]

In the embodiments described above, an additively-manufactured product is obtained by forming outer peripheral portion 71 and then forming inner portion 72. However, inner portion 72 may be formed, and then, outer peripheral portion 71 may be formed. Alternatively, a part of outer peripheral portion 71 may be formed, a part of inner portion 72 may be formed, another part of outer peripheral portion 71 may be formed, and then, another part of inner portion 72 may be formed. Furthermore, while outer peripheral portion 71 and inner portion 72 are formed along the arrows shown in Fig. 4, the portions may be formed in any order.

In the embodiments described above, the EN ratio may be changed depending on the location detected by detector 60. For example, the height of weld bead 70 may be detected at multiple locations in outer peripheral portion 71 or inner portion 72, and the EN ratio may be changed in accordance with the stacking height at the detected location. This enables fine adjustment of the EN ratio.

### [Summary]

(1) The present disclosure relates to additive manufacturing system 1 that supplies a welding current to a consumable electrode wire 51 and stacks a weld bead 70 to form an additively-manufactured product. Additive manufacturing system 1 includes: a welding torch 20 that stacks weld bead 70 using consumable electrode wire 51; a drive device (robot arm 40) that moves welding torch 20; a welding power supply 10 that supplies an alternating current to consumable electrode wire 51 as the welding current; and a controller 30 that controls welding torch 20, the drive device (robot arm 40), and welding power supply 10 so as to form any one portion of outer peripheral portion 71 and inner portion 72, which is surrounded by outer peripheral portion 71, and then form the other portion in formation of each layer in the additively-manufactured product. Controller 30 individually sets an EN ratio of outer peripheral portion 71 that is an EN ratio of the alternating current in the formation of outer peripheral portion 71, and an EN ratio of inner portion 72 that is an EN ratio of the alternating current in the formation of inner portion 72.
   With additive manufacturing system 1 according to the present disclosure, controller 30 controls welding torch 20, the drive device (robot arm 40), and welding power supply 10 so as to form any one portion of outer peripheral portion 71 and inner portion 72, which is surrounded by outer peripheral portion 71, and then form the other portion in formation of each layer of the additively-manufactured product. Furthermore, controller 30 individually sets the EN ratio of outer peripheral portion 71 that is the EN ratio of the alternating current in the formation of outer peripheral portion 71, and the EN ratio of inner portion 72 that is the EN ratio of the alternating current in the formation of inner portion 72. Consequently, the EN ratio of outer peripheral portion 71 and the EN ratio of inner portion 72 can be set individually, thereby forming a stable additively-manufactured product with reduced burn-through of weld bead 70.
(2) In the additive manufacturing system according to (1), controller 30 sets the EN ratio of outer peripheral portion 71 in accordance with a stacking height of weld bead 70 at outer peripheral portion 71, and sets the EN ratio of inner portion 72 in accordance with a stacking height of weld bead 70 at inner portion 72.
   With additive manufacturing system 1 according to the present disclosure, the EN ratio of outer peripheral portion 71 can be set in accordance with the stacking height of weld bead 70 at outer peripheral portion 71, and the EN ratio of inner portion 72 can be set in accordance with the stacking height of weld bead 70 at inner portion 72, thus forming a stable additively-manufactured product with reduced burn-through of weld bead 70.
(3) In the additive manufacturing system according to (1) or (2), in the formation of each layer in the additively-manufactured product, controller 30 performs control to form outer peripheral portion 71, and then, form inner portion 72.
   With additive manufacturing system 1 according to the present disclosure, weld bead 70 can be stacked at inner portion 72 after the formation of outer peripheral portion 71 in the formation of each layer of the additively-manufactured product, thus preventing the weld bead at inner portion 72 from leaking out of outer peripheral portion 71.
(4) In the additive manufacturing system according to any one of (1) to (3), controller 30 sets the EN ratio of outer peripheral portion 71 and the EN ratio of inner portion 72 before starting the stacking of weld bead 70.
   With additive manufacturing system 1 according to the present disclosure, the EN ratio of outer peripheral portion 71 and the EN ratio of inner portion 72 are set before starting the stacking of weld bead 70. This enables the formation of a stable additively-manufactured product with reduced burn-through of weld bead 70 based on the EN ratio of outer peripheral portion 71 and the EN ratio of inner portion 72 determined with consideration given to the shape of the final product.
(5) The additive manufacturing system according to any one of (1) to (3) further includes a detector 60 that detects a stacking height of weld bead 70. When determining, based on a detection value of detector 60, that a value obtained by subtracting a stacking height of outer peripheral portion 71 from a stacking height of inner portion 72 has exceeded a predetermined first threshold (threshold h1), controller 30 sets the EN ratio of outer peripheral portion 71 and the EN ratio of inner portion 72 such that the EN ratio of outer peripheral portion 71 is higher than the EN ratio of inner portion 72.
   With additive manufacturing system 1 according to the present disclosure, the value obtained by subtracting the stacking height of outer peripheral portion 71 from the stacking height of inner portion 72 is compared with the first threshold, and the EN ratio of outer peripheral portion 71 and the EN ratio of inner portion 72 are set. Consequently, the EN ratio can be set based on the threshold during stacking, thereby forming an additively manufactured product with reduced burn-through of weld bead 70
(6) The additive manufacturing system according to any one of (1) to (3) further includes a detector 60 that detects a stacking height of weld bead 70. When determining, based on a detection value of detector 60, that a value obtained by subtracting a stacking height of inner portion 72 from a stacking height of outer peripheral portion 71 has exceeded a predetermined second threshold (threshold h2), controller 30 sets the EN ratio of outer peripheral portion 71 and the EN ratio of inner portion 72 such that the EN ratio of inner portion 72 is higher than the EN ratio of outer peripheral portion 71.
   With additive manufacturing system 1 according to the present disclosure, the value obtained by subtracting the stacking height of inner portion 72 from the stacking height of outer peripheral portion 71 is compared with the second threshold, and the EN ratio of outer peripheral portion 71 and the EN ratio of inner portion 72 are set. Consequently, the EN ratio can be set based on the threshold during stacking, thereby forming a stable additively-manufactured product with reduced burn-through of weld bead 70.
(7) The additive manufacturing system according to any one of (1) to (3) further includes a detector 60 that detects a stacking height of weld bead 70. When a number of stacked layers of weld bead 70 at outer peripheral portion 71 and inner portion 72 reaches a target value for detecting the stacking height of weld bead 70, controller 30 sets the EN ratio of outer peripheral portion 71 and the EN ratio of inner portion 72 based on a detection value of detector 60.

With additive manufacturing system 1 according to the present disclosure, when the number of stacked layers reaches the target value for detecting the height, the EN ratio of outer peripheral portion 71 and the EN ratio of inner portion 72 are set based on the detection value of detector 60. Consequently, the EN ratio can be set during stacking when the number of stacked layers reaches the target value for detecting the height, thereby forming a stable additively-manufactured product with reduced burn-through of weld bead 70.

While the embodiments of the present invention have been described above, the presently disclosed embodiments should be considered in all aspects illustrative and not restrictive. It is intended that the scope of the present invention is defined by claims, not only by the above description, and encompasses all modifications and variations equivalent in meaning and scope to the claims.

## Claims

1. An additive manufacturing system (1) that supplies a welding current to a consumable electrode wire (51) and stacks a weld bead (70) to form an additively-manufactured product, the additive manufacturing system (1) comprising:
a welding torch (20) that stacks the weld bead (70) using the consumable electrode wire (51);
a drive device (40) that moves the welding torch (20);
a welding power supply (10) that supplies an alternating current to the consumable electrode wire (51) as the welding current; and
a controller (30) that controls the welding torch (20), the drive device (40), and the welding power supply (10) so as to form any one portion of an outer peripheral portion (71) and an inner portion (72) and then form the other portion in formation of each layer in the additively-manufactured product, the inner portion (72) being surrounded by the outer peripheral portion (71),
wherein the controller (30) individually sets
an EN ratio of the outer peripheral portion (71) that is an EN ratio of the alternating current in the formation of the outer peripheral portion (71), and
an EN ratio of the inner portion (72) that is an EN ratio of the alternating current in the formation of the inner portion (72).

2. The additive manufacturing system according to claim 1, wherein the controller (30) sets the EN ratio of the outer peripheral portion (71) in accordance with a stacking height of the weld bead (70) at the outer peripheral portion (71), and sets the EN ratio of the inner portion (72) in accordance with a stacking height of the weld bead (70) at the inner portion (72).

3. The additive manufacturing system according to claim 1 or 2, wherein in the formation of each layer in the additively-manufactured product, the controller (70) perform control to form the outer peripheral portion (71), and then, form the inner portion (72).

4. The additive manufacturing system according to claim 1 or 2, wherein the controller (30) sets the EN ratio of the outer peripheral portion (71) and the EN ratio of the inner portion (72) before starting the stacking of the weld bead (70).

5. The additive manufacturing system according to claim 1 or 2, further comprising a detector (60) that detects a stacking height of the weld bead (70),
wherein when determining, based on a detection value of the detector (60), that a value obtained by subtracting a stacking height of the outer peripheral portion (71) from a stacking height of the inner portion (72) has exceeded a predetermined first threshold (h1), the controller (30) sets the EN ratio of the outer peripheral portion (71) and the EN ratio of the inner portion (72) such that the EN ratio of the outer peripheral portion (71) is higher than the EN ratio of the inner portion (72).

6. The additive manufacturing system according to claim 1 or 2, further comprising a detector (60) that detects a stacking height of the weld bead (70),
wherein when determining, based on a detection value of the detector (60), that a value obtained by subtracting a stacking height of the inner portion (72) from a stacking height of the outer peripheral portion (71) has exceeded a predetermined second threshold (h2), the controller (30) sets the EN ratio of the outer peripheral portion (71) and the EN ratio of the inner portion (72) such that the EN ratio of the inner portion (72) is higher than the EN ratio of the outer peripheral portion (71).

7. The additive manufacturing system according to claim 1 or 2, further comprising a detector (60) that detects a stacking height of the weld bead (70),
wherein when a number of stacked layers of the weld bead (70) at the outer peripheral portion (71) and the inner portion (72) reaches a target value for detecting
